# EUROPEAN PATENT APPLICATION

(11) **EP 1 422 432 A1**
(43) Date of publication of application: **26.05.2004**
(21) Application number: 02758867.2
(22) Date of filing: 22.08.2002
(51) Int. Cl.: F16D 27/10

(54) **POWER TRANSMISSION DEVICE**

(30) Priority: 27.08.2001 JP 2001256507
(71) Applicant: Toyoda Koki Kabushiki Kaisha, Kariya-shi, Aichi 448-8652 (JP)
(72) Inventor: SAITO, Yasunari, c/o TOYODA KOKI KABUSHIKI KAISHA, Kariya-shi, Aichi 448-8652 (JP); SUZUKI, Kunihiko, TOYODA KOKI KABUSHIKI KAISHA, Kariya-shi, Aichi 448-8652 (JP)
(74) Representative: Leson, Thomas Johannes Alois, Dipl.-Ing.
(86) International application number: PCT/JP2002/008468
(87) International publication number: WO 2003/019027

(57) **Abstract**

A power transmission device includes a first rotating member and a second rotating member rotatably supported in a casing. A clutch mechanism is placed between the first rotating member and the second rotating member, and switched between a power transmission state and a power shutoff state between the first rotating member and the second rotating member. A pilot mechanism switches the clutch mechanism between the power transmission state and the power shutoff state. A yoke is fitted to the casing to support the pilot mechanism. Power is transmitted between the first rotating member and the second rotating member when the pilot mechanism switches the clutch mechanism to the power transmission state. The casing includes a front portion and a rear portion divided and connected along an axis of the first rotating member and the second rotating member, and the yoke is fitted to the front portion. A mounting portion is formed in one of the rear portion and the yoke, and an urging member for urging the yoke toward the front portion is fitted to the mounting portion.

## Description

### TECHNICAL FIELD

The present invention relates to a power transmission device for transmitting power between a first rotating member and a second rotating member. More specifically, the present invention relates to a power transmission device that is provided between a drive shaft and a driven shaft in a four-wheel drive car and transmits torque between the shafts.

### BACKGROUND ART

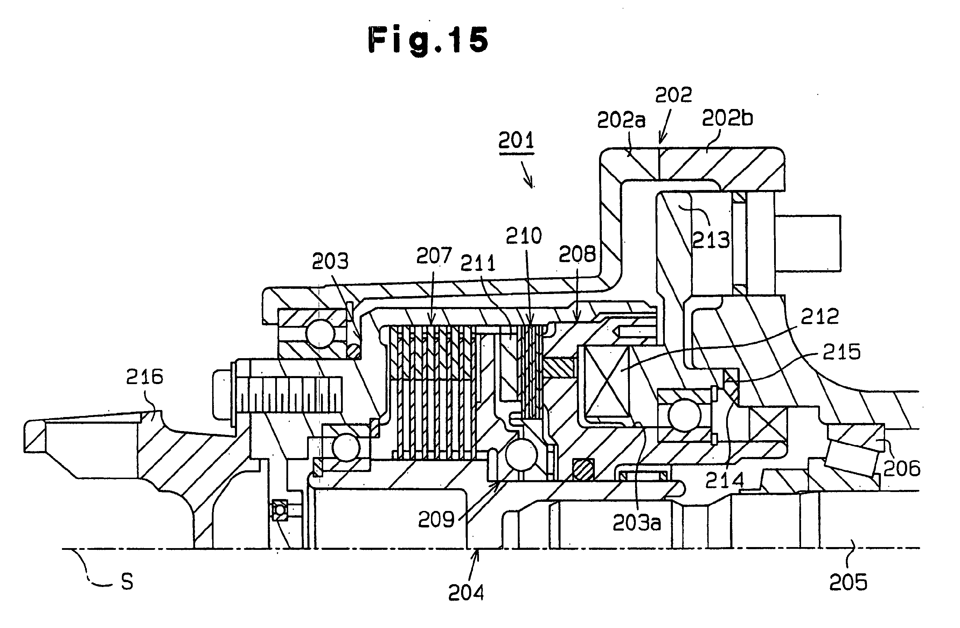

A known power transmission device of this type is as described below. Specifically, as shown in Figure 15, a power transmission device 201 has an outer casing 202 including a first differential carrier 202a and a second differential carrier 202b secured to a vehicle, and an inner case 203 is placed in the outer casing 202.

The inner case 203 is rotatable around its own axis S relative to the outer casing 202. A propeller shaft 216 is unitarily rotatably connected to a front end of the inner case 203. An inner shaft 204 coaxial with the inner case 203 is provided in the inner case 203 rotatably relative to the inner case 203. A drive pinion shaft 205 is unitarily rotatably connected to a rear end of the inner shaft 204, that is, the right end in Figure 15, and the drive pinion shaft 205 is supported by the second differential carrier 202b via a bearing 206.

A main clutch mechanism 207, a pilot clutch mechanism 208 and a cam mechanism 209 are located between the inner case 203 and the inner shaft 204. The pilot clutch mechanism 208 has a friction clutch 210, an annular armature 211, and an annular electromagnet 212. The electromagnet 212 is placed in an annular recess 203a formed in a rear side wall of the inner case 203 while being fitted to a cylindrical support formed in a front end of a yoke 213.

In the power transmission device 201, the electromagnet 212 is energized to cause the armature 211 to be attracted to the friction clutch 210, and the friction clutch 210 is switched from a power shutoff state to a power transmission state. Thus, the main clutch mechanism 207 is switched from the power shutoff state to the power transmission state via the cam mechanism 209 to connect the propeller shaft 216 and the drive pinion shaft 205.

In the second differential carrier 202b, an annular bearing accommodation recess 214 is formed in a portion facing a rear end of the yoke 213, and a conical spring 215 is placed between the yoke 213 and the bearing accommodation recess 214. An urging force of the conical spring 215 restrains movement of the yoke 213 along the axis S relative to the outer casing 202.

The power transmission device 201 is assembled by the following steps.

First, the inner shaft 204, the main clutch mechanism 207, the cam mechanism 209, the friction clutch 210, the armature 211, the electromagnet 212, and the yoke 213 are assembled to the inner case 203. Then, the inner case 203 is assembled to the first differential carrier 202a. Next, the drive pinion shaft 205 and the bearing 206 are assembled to the second differential carrier 202b.

Finally, the conical spring 215 is placed in the bearing accommodation recess 214, and the first differential carrier 202a and the second differential carrier 202b are assembled.

However, when the carriers 202a and 202b are assembled with their axis S being substantially horizontally held, there is no support on the side of the yoke 213 of the conical spring 215, and the conical spring 215 may fall out of the bearing accommodation recess 214 before the assembly of the carriers 202a and 202b is finished. Therefore, the conical spring 215 must be placed again in the bearing accommodation recess 214, reducing operational efficiency.

In order to prevent the conical spring 215 from falling out of the bearing accommodation recess 214, assembling the carriers 202a and 202b with their axis S being substantially vertically held is considered. Specifically, the second differential carrier 202b is placed so that the bearing accommodation recess 214 opens upward, and the conical spring 215 is placed in the bearing accommodation recess 214. This causes the conical spring 215 to always abut against an inner wall of the bearing accommodation recess 214 by gravity of the conical spring 215, and prevents the conical spring 215 from falling out of the bearing accommodation recess 214. Thus, in this state, the first differential carrier 202a can be assembled to the second differential carrier 202b from above.

However, when the power transmission device 201 is assembled on a production line, assembling the carriers 202a and 202b with their S axis being substantially vertically placed is difficult in terms of constraints for the line, and thus assembling with their S axis being substantially horizontally held is desired.

The invention is made in view of the above described circumstances, and has an object to provide a power transmission device that can efficiently assemble members and mechanisms of the device with their axis being substantially horizontally held, without an urging member falling out.

### DISCLOSURE OF THE INVENTION

In order to achieve the above described object, an embodiment of the invention provides a power transmission device having a configuration described below. The device includes a first rotating member and a second rotating member rotatably supported in a casing. A clutch mechanism is placed between the first rotating member and the second rotating member, and switched between a power transmission state and a power shutoff state between the first rotating member and the second rotating member. A pilot mechanism switches the clutch mechanism between the power transmission state and the power shutoff state. A yoke is fitted to the casing to support the pilot mechanism. Power is transmitted between the first rotating member and the second rotating member when the pilot mechanism switches the clutch mechanism to the power transmission state. The casing includes a front portion and a rear portion divided and connected along an axis of the first rotating member and the second rotating member, and the yoke is fitted to the front portion. A mounting portion is formed in one of the rear portion and the yoke, and an urging member for urging the yoke toward the front portion is fitted to the mounting portion. The urging member is fitted to the mounting portion, and thus prevented from falling off during assembly.

Another embodiment of the invention provides a method for assembling a casing as described below. The method is for assembling the casing by providing a front portion and a rear portion divided along an axis of a first rotating member and a second rotating member in a casing that accommodates the first rotating member and the second rotating member, and connecting the front portion and the rear portion. According to the method, an urging member for urging a yoke toward the front portion is fitted to a mounting portion provided in one of the yoke fitted to the front portion and the rear portion, and is held by the mounting portion. Then, the front portion and the rear portion are connected with the front portion and the rear portion being placed along a substantially horizontal axis. This prevents the urging member from falling off during assembly of the casing.

### BRIEF DESCRIPTION OF THE DRAWINGS

Figure 1 is a front sectional view of a power transmission device according to a first embodiment that embodies the invention;
Figure 2 is a schematic view of a configuration of a vehicle including the power transmission device in Figure 1;
Figure 3 is an enlarged front sectional view of essential portions of the power transmission device in Figure 1;
Figure 4 is a sectional view taken along the line 4-4 in Figure 1;
Figure 5 is an enlarged view of parts of a yoke, a spring and a carrier;
Figure 6(a) is a front view of the spring fitted to the yoke;
Figure 6(b) is a side view of the spring in Figure 6(a);
Figure 7 is a perspective view of the spring and the yoke;
Figure 8(a) is a perspective view of a spring and a yoke according to a second embodiment;
Figure 8(b) is a side sectional view of the spring in Figure 8(a);
Figure 9 is a front sectional view of essential portions of a power transmission device according to the second embodiment;
Figure 10 is a sectional view taken along the line 10-10 in Figure 9;
Figure 11 is a front sectional view of essential portions of a power transmission device according to a third embodiment;
Figure 12 is a partial sectional view taken along the line 12-12 in Figure 11;
Figure 13 is a sectional view taken along the line 13-13 in Figure 11;
Figure 14 is a perspective view of a spring and a yoke according to another embodiment; and
Figure 15 is a front sectional view of a conventional power transmission device.

### BEST MODE FOR CARRYING OUT THE INVENTION

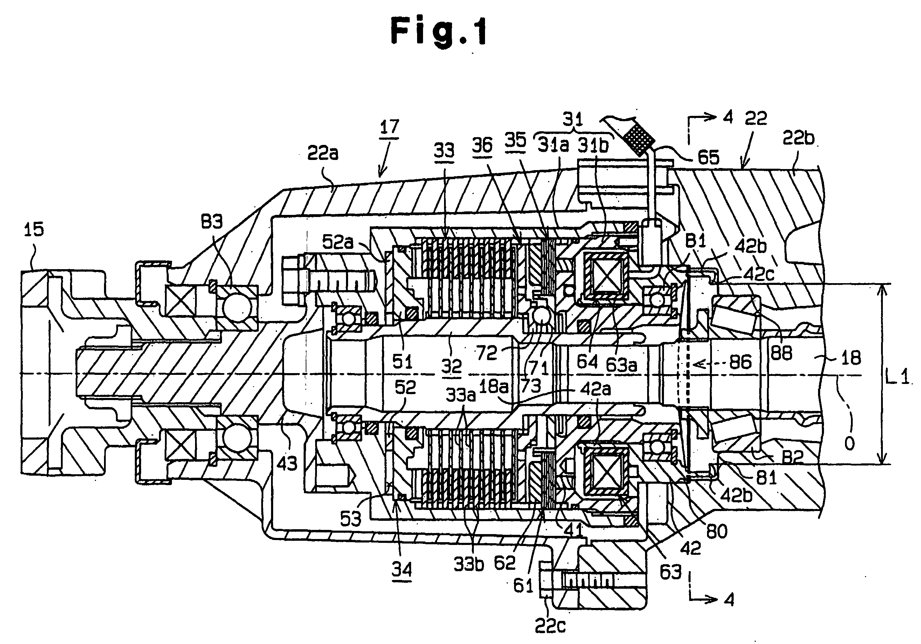

Now, an embodiment that embodies the invention in a power transmission device provided in a power transmission path to rear wheels of a four-wheel drive car based on front-wheel drive will be described with reference to Figures 1 to 7.

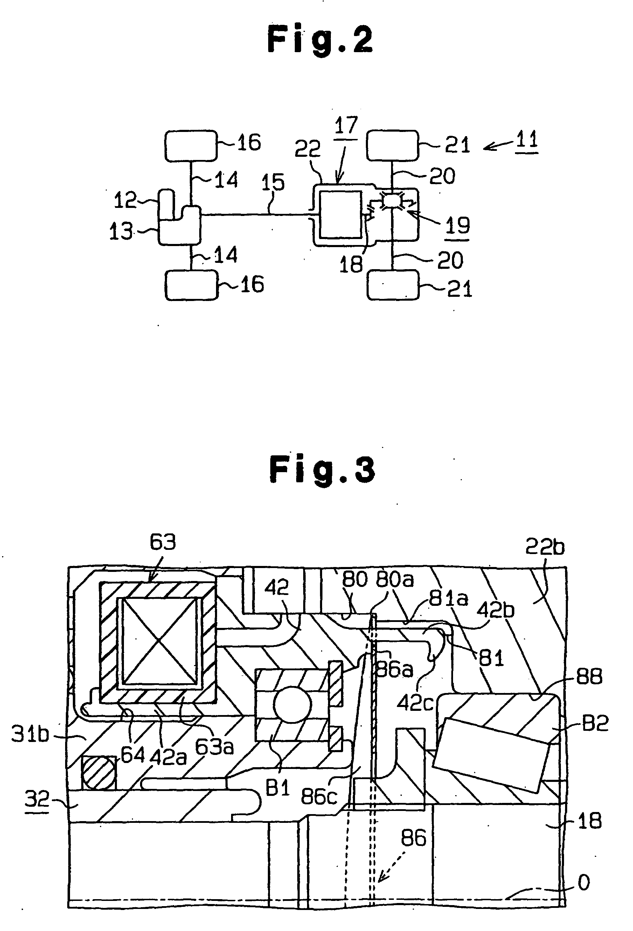

As shown in Figure 2, a vehicle 11 of the four-wheel drive car has an engine 12 and a transaxle 13. A pair of front axles 14 and a propeller shaft 15 are connected to the transaxle 13. Front wheels 16 are connected to the front axles 14. A power transmission device 17 is connected to the propeller shaft 15. A rear differential 19 is connected to the power transmission device 17 via a drive pinion shaft 18. Rear wheels 21 are connected to the rear differential 19 via a pair of rear axles 20.

The power transmission device 17 has a differential carrier 22, and the drive pinion shaft 18 and the rear differential 19 are accommodated and supported in the differential carrier 22. The differential carrier 22 corresponds to an outer casing.

The differential carrier 22 is supported by a vehicle body, and the differential carrier 22 contains differential oil. A drive force of the engine 12 is transmitted to the front wheels 16 via the transaxle 13 and the front axles 14. When the propeller shaft 15 and the drive pinion shaft 18 are connected by the power transmission device 17 to allow transmission of torque between the propeller shaft 15 and the drive pinion shaft 18, the drive force of the engine 12 is transmitted to the rear wheels 21 'via the propeller shaft 15, the drive pinion shaft 18, the rear differential 19 and the rear axles 20.

As shown in Figure 1, the differential carrier 22 of the power transmission device 17 includes a front carrier 22a, and a rear carrier 22b connected to the front carrier 22a with a plurality of screws 22c (only one is shown). The power transmission device 17 has an inner case 31. An inner shaft 32, a main clutch mechanism 33, a pressing force generation mechanism 34, a pilot clutch mechanism 35 and a cam mechanism 36 are accommodated in the inner case 31.

The inner case 31 is connected to the propeller shaft 15, and corresponds to a first rotating member. The inner shaft 32 is connected to the drive pinion shaft 18, and corresponds to a second rotating member.

The inner case 31 has a cylindrical front housing 31a with open opposite ends, and ay rear housing 31b screwed into a rear end opening of the front housing 31a. The front housing 31a is formed of an aluminum alloy that is a non-magnetic material, and the rear housing 31b is formed of low-carbon steel (for example, S35C or S10C) that is a soft magnetic material. An annular cylinder 41 using non-magnetic stainless steel as a non-magnetic material is embedded in a middle portion radially of the rear housing 31b.

A yoke 42 is fitted in the front carrier 22a and the rear carrier 22b. The yoke 42 is formed of a metal material such as low-carbon steel like the rear housing 31b. The rear housing 31b is relatively rotatably supported, at its rear end, by the yoke 42 via a bearing B1. Specifically, the inner case 31 is supported by the differential carrier 22 via the yoke 42.

The inner shaft 32 is formed into a cylindrical shape with open opposite ends, and its front end (the left end in Figure 1) in a liquid-tight manner passes through the center of the rear housing 31b to be inserted into the front housing 31a. The inner shaft 32 is relatively rotatably supported by the housings 31a and 31b with movement of the inner shaft 32 along its own axis O being restricted. The inner case 31 is placed coaxially with the inner shaft 32.

An end 18a of the drive pinion shaft 18 is spline-connected to a rear end of the inner shaft 32 (the right end in Figure 1). A bearing B2 is fitted into a fitting hole 88 of the rear carrier 22b. The drive pinion shaft 18 is rotatably supported by the rear carrier 22b via the bearing B2.

A flange-shaped base of an input shaft 43 is unitarily rotatably secured to a front end of the front housing 31a (the left end in Figure 1) with bolts. The input shaft 43 is relatively rotatably supported by an inner peripheral surface of the front end of the front carrier 22a via a bearing B3. A tip of the input shaft 43 is unitarily rotatably connected to the propeller shaft 15. Thus, the input shaft 43 unitarily rotates with the propeller shaft 15 and the front housing 31a.

A main clutch mechanism 33 is provided forward between the inner case 31 and the inner shaft 32. The main clutch mechanism 33 is a wet multiple disc type friction clutch mechanism, and has a plurality of inner clutch plates 33a and a plurality of outer clutch plates 33b. The inner clutch plates 33a and the outer clutch plates 33b each are formed into a disc shape.

Each inner clutch plate 33a is spline-connected to an outer peripheral surface of the inner shaft 32, and is movable along the axis O. Each outer clutch plate 33b is spline-connected to an inner peripheral surface of the front housing 31a, and is movable along the axis O. Each inner clutch plate 33a and each outer clutch plate 33b are alternately placed, and switched between a state where the clutch plates 33a and 33b abut against each other for frictional engagement, and a free state where the clutch plates 33a and 33b are spaced apart for disengagement.

The pressing force generation mechanism 34 is placed forward of the main clutch mechanism 33 in the front housing 31a. The pressing force generation mechanism 34 has a working piston 51, a rotor 52 and a fluid chamber 53.

The inner shaft 32 is inserted in a liquid-tight manner into the working piston 51, and the working piston 51 is rotatable relative to the inner shaft 32 and movable along the axis O. An outer peripheral surface of the working piston 51 in a liquid-tight manner contacts the inner peripheral surface of the front housing 31a, and is slidable along the inner peripheral surface.

The fluid chamber 53 is a space surrounded by the inner peripheral surface of the front housing 31a, a front end surface of the working piston 51, and the outer peripheral surface of the inner shaft 32. The fluid chamber 53 contains a high viscous fluid such as silicone oil.

The rotor 52 unitarily rotatably secured to the outer peripheral surface of the inner shaft 32 is accommodated in the fluid chamber 53. The rotor 52 has a plurality of vanes 52a extending radially, and the plurality of vanes 52a partition the fluid chamber 53 into two parts.

The pilot clutch mechanism 35 is provided rearward (the right side in Figure 1) between the inner case 31 and the inner shaft 32. The pilot clutch mechanism 35 has a friction clutch 61, an armature 62 and an electromagnet 63. The armature 62 and the electromagnet 63 constitute a magnetic drive mechanism.

The friction clutch 61 is a wet multiple disc type friction clutch mechanism, and has a plurality of inner clutch plates and a plurality of outer clutch plates. The inner clutch plates and the outer clutch plates each are formed into a disc shape. Each inner clutch plate is spline-connected to an outer peripheral surface of a first cam member 71 that constitutes the cam mechanism 36, and is movable along the axis O. Each outer clutch plate is spline-connected to the inner peripheral surface of the front housing 31a, and is movable along the axis O. Each inner clutch plate and each outer clutch plate are alternately placed, and switched between a state where the clutch plates abut against each other for frictional engagement, and a free state where the clutch plates are spaced apart for disengagement.

The armature 62 is placed between a second cam member 72 that constitutes the cam mechanism 36 and the friction clutch 61. The armature 62 is formed into an annular shape, and spline-connected to the inner peripheral surface of the front housing 31a. The armature 62 is movable along the axis O, and unitarily rotatable with the inner case 31.

The electromagnet 63 has an annular coil case 63a formed of a synthetic resin material (for example, unsaturated polyester), and a coil of a copper wire wound a predetermined number of times is accommodated in the coil case 63a. The coil case 63a is accommodated in an annular recess 64 formed in the rear portion of the rear housing 31b while being inserted into a support cylinder 42a of the yoke 42.

A predetermined gap is provided between an inner peripheral surface of the support cylinder 42a of the yoke 42 and an inner peripheral surface on a smaller diameter side of the annular recess 64, and between an outer peripheral surface of the electromagnet 63 and an inner peripheral surface on a larger diameter side of the annular recess 64. The yoke 42 is rotatably placed relative to an inner surface of the annular recess 64 of the rear housing 31b via the bearing B1. A rear end of the yoke 42 is inserted into a cylindrical recess 80 formed in the differential carrier 22.

An inner end of a lead wire 65 is connected to the electromagnet 63, and an outer end of the lead wire 65 is led out of the differential carrier 22. The outer end of the lead wire 65 is connected to a battery (not shown) via a switch (not shown) provided outside the differential carrier 22. When the switch is turned on to energize the coil of the electromagnet 63, a magnetic path is formed around the electromagnet 63. Then, the armature 62 is attracted to the electromagnet 63 by magnetic induction effect, thus causing frictional engagement of the plates of the friction clutch 61.

The cam mechanism 36 has the annular first cam member 71, the annular second cam member 72, and a plurality of spherical cam bodies 73. A plurality of cam grooves are formed in facing surfaces of the cam members 71 and 72 at predetermined intervals circumferentially about the cam members 71 and 72. The cam bodies 73 are fitted into the facing cam grooves of the cam members 71 and 72.

The first cam member 71 is relatively rotatably inserted into the inner shaft 32, and contacts the front end of the rear housing 31b via the bearing. The second cam member 72 is spline-connected to the outer'peripheral surface of the inner shaft 32, and is movable along the axis O. The second cam member 72 is provided so as to face the inner clutch plate 33a of the main clutch mechanism 33.

When the friction clutch 61 of the pilot clutch mechanism 35 is in a non-frictional engagement state, the first cam member 71 is held in a free state. On the other hand, when the friction clutch 61 enters a frictional engagement state, the first cam member 71 is connected to the inner case 31. Then, relative rotation occurs between the first cam member 71 and the second cam member 72, and the first cam member 71 presses the second cam member 72 toward the main clutch mechanism 33 via the cam body 73. This causes the main clutch mechanism 33 to enter a frictional engagement state.

Specifically, when the coil of the electromagnet 63 of the pilot clutch mechanism 35 is in a de-energized state, the friction clutch 61 and the armature 62 are in a free state, and the cam members 71 and 72 are held to be unitarily rotatable relative to the inner shaft 32 via the cam body 73.

Therefore, when the coil of the electromagnet 63 is not energized, a differential rotation between the propeller shaft 15 and the drive pinion shaft 18 and also the inner shaft 32 is permitted. In this case, the relative rotation occurs between the inner case 31 and the inner shaft 32, and the rotor 52 rotates relative to the inner case 31 in the fluid chamber 53. Then, a pressing force depending on a differential rotational speed between the propeller shaft 15 and the drive pinion shaft 18 is generated in the fluid chamber 53. The pressing force causes the working piston 51 to move toward the main clutch mechanism 33. The main clutch mechanism 33 is switched to the frictional engagement state depending on the degree of the pressing force transmitted via the working piston 51. Specifically, torque depending on the differential rotational speed between the propeller shaft 15 and the drive pinion shaft 18 is transmitted from the propeller shaft 15 to the drive pinion shaft 18 to cause the vehicle 11 to enter a real-time four-wheel drive state.

When the coil of the electromagnet 63 is energized with the differential rotation between the propeller shaft 15 and the drive pinion shaft 18 being permitted, the armature 62 is attracted to the electromagnet 63 by the magnetic induction effect. Then, the friction clutch 61 enters the frictional engagement state, and the first cam member 71 is connected to the inner case 31. This causes the relative rotation between the first cam member 71 and the second cam member 72, and a pressing force in the cam mechanism 36. The pressing force causes the main clutch mechanism 33 to be switched to the frictional engagement state. Therefore, the propeller shaft 15 and the drive pinion shaft 18 are fully connected to cause the vehicle 11 to enter the four-wheel drive state with continuous direct connection.

As shown in Figures 1 and 3-5, in an inner periphery of the rear carrier 22b, an insert hole 81 having a diameter smaller than that of the cylindrical recess 80 and larger than that of the bearing fitting hole 88 is formed rearward of the cylindrical recess 80 and forward of the bearing fitting hole 88.

As shown in Figures 1 and 3, a pair of detent grooves 81a extending along the axis O are formed in an inner peripheral surface of the insert hole 81. The detent grooves 81a are 180° apart around the axis O. The detent groove 81a corresponds to an engaged portion.

A pair of mounting pieces 42b each having a substantially rectangular section to which a spring 86 is mounted are integrally formed in the rear end surface of the yoke 42. The mounting pieces 42b are formed 180° apart around the axis O. The mounting pieces 42b are engaged in the detent grooves 81a. Thus, the mounting pieces 42b function as protrusions for stopping rotation of the yoke 42 relative to the rear carrier 22b.

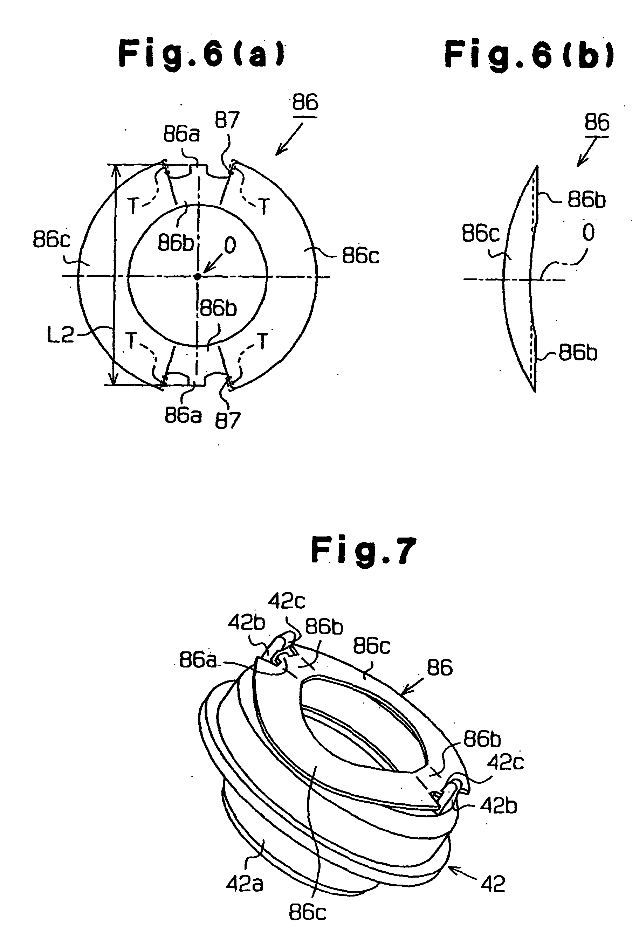

A substantially annular spring 86 as an urging member is placed between the mounting pieces 42b, and the drive pinion shaft 18 is inserted into a substantially central hole of the spring 86. As shown in Figure 6(a), a pair of notch recesses 87 are formed in an outer periphery of the spring 86. The notch recesses 87 are 180° apart around the axis O. The mounting pieces 42b are engaged in the notch recesses 87 to cause the spring 86 to be non-rotatably secured to the mounting pieces 42b of the yoke 42.

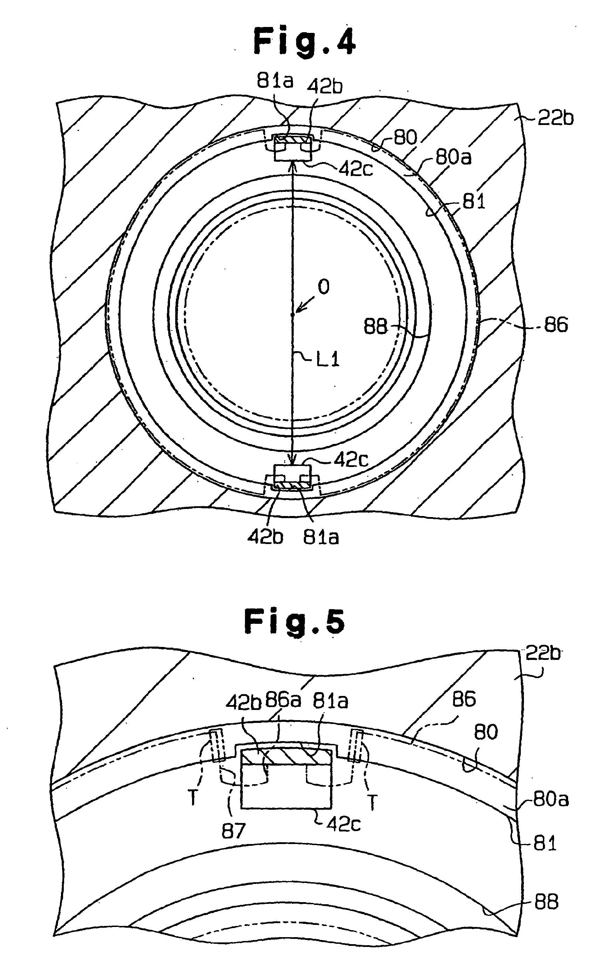

A protruding piece 86a is formed on a bottom wall of each notch recess 87, and the protruding piece 86a is placed inside an imaginary circle along an outline of the spring 86. As shown in Figure 5, the protruding piece 86a abuts against the mounting piece 42b. As shown in Figure 3, a locking claw 42c protruding inward is formed on a tip of the mounting piece 42b. The locking claw 42c prevents the protruding piece 86a abutting against the mounting piece 42b from falling off along the axis O when the power transmission device 17 is assembled. The locking claw 42c corresponds to a locking portion.

As shown in Figures 1 and 6(a), a distance L1 between the pair of facing locking claws 42c is set shorter than a distance L2 between tips of the pair of protruding pieces 86a.

As shown in Figures 6(a) and 6(b), in the spring 86, a flat portion 86b flush with the protruding piece 86a is formed inward of each protruding piece 86a. As shown in Figures 6(a) and 6(b), in the spring 86, a substantially semicircular blade 86c is formed on either side along the width of the flat portion 86b. As shown in Figures 1 and 7, the blade 86c is curved forward, and a central outer periphery of the blade 86c abuts against the rear end surface of the yoke 42 due to its elasticity. As shown in Figures 3, 5 and 6(a), an inner side wall of the notch recess 87 forms an abutment portion T that abuts against a stepped portion 80a formed in the cylindrical recess 80.

Therefore, the spring 86 urges the yoke 42 and the rear carrier 22b so as to move apart from each other to restrain rattling of the yoke 42 along the axis O and in the radial direction relative to the differential carrier 22.

Next, a method for assembling the power transmission device 17 will be described.

First, the protruding pieces 86a of the spring 86 are pressed against the locking claws 42c of the yoke 42 along the axis O. Then, the protruding pieces 86a are deformed against their elasticity to pass through the locking claws 42c, returned to their original shape by their elasticity, and then abut against the mounting pieces 42b. When the protruding pieces 86a abut against the mounting pieces 42b, the notch recesses 87 engage the mounting pieces 42b. Thus, the spring 86 does not rotate relative to the mounting pieces 42b of the yoke 42 even if torque around the axis O is applied to the spring 86. Further, the distance L1 between the pair of locking claws 42c is shorter than the distance L2 between the tips of the protruding pieces 86a. Therefore, each locking claw 42c is placed inside each protruding piece 86a to prevent the spring 86 from falling off rearward along the axis O.

Next, the pressing force generation mechanism 34, the main clutch mechanism 33, the cam mechanism 36, the pilot clutch mechanism 35, the cylinder 41, the rear housing 31b, the bearing B1, the inner shaft 32, the yoke 42, the input shaft 43, and the lead wire 65 are assembled to the front housing 31a. Further, the front housing 31a, the bearing B3 and the propeller shaft 15 are assembled to the front carrier 22a. On the other hand, the bearing B2 and the drive pinion shaft 18 are assembled to the rear carrier 22b.

Then, the front carrier 22a and the rear carrier 22b to which predetermined parts have been assembled as described above are assembled, the carriers 22a and 22b are secured with the screws 22c, and then the assembly of the power transmission device 17 is completed. At this time, the spring 86 is previously secured to the yoke 42, thus preventing the spring 86 from falling off from the yoke 42 and allowing the front carrier 22a and the rear carrier 22b to be efficiently assembled.

Therefore, the power transmission device 17 according to the first embodiment provides the following advantages:
(1) In the embodiment, the mounting piece 42b is provided in the yoke 42, and the spring 86 abutting against both the yoke 42 and the rear carrier 22b is provided on the mounting piece 42b. Then, the spring 86 restrains rattling of the yoke 42 along the axis O relative to the differential carrier 22 and rattling of the mounting piece 42b in the radial direction relative to the insert hole 81. Thus, once the spring 86 is mounted to the mounting piece 42b, the spring 86 is held by the mounting piece 42b and prevented from falling off even if the yoke 42 is located at any angles. This allows members and mechanisms that constitute the power transmission device 17 to be efficiently assembled with the axis O being substantially horizontally held.
(2) In the embodiment, the pair of mounting pieces 42b 180° apart around the axis O are formed on the rear end surface of the yoke 42. The pair of protruding pieces 86a of the spring 86 are abutted against the pair of mounting pieces 42b. Then, the pair of locking claws 42c protruding inward are formed on the tips of the mounting pieces 42b to prevent the protruding pieces 86a from falling off from the mounting pieces 42b by the locking claws 42c. This prevents the spring 86 from accidentally falling off from the mounting pieces 42b by the locking claws 42c when the power transmission device 17 is assembled.
(3) In the embodiment, the pair of notch recesses 87 180° apart around the axis O are formed on the outer periphery of the spring 86. Thus, the notch recesses 87 of the spring 86 are engaged to the mounting pieces 42b to non-rotatably mount the spring 86 to the mounting pieces 42b.
(4) In the embodiment, the pair of detent grooves 81a 180° apart around the axis O are formed on the inner surface of the insert hole 81 of the rear carrier 22b, and the detent' grooves 81a are formed so as to extend along the axis O. Then, the mounting pieces 42b of the yoke 42 are engaged in the detent grooves 81a to stop rotation of the yoke 42 relative to the differential carrier 22. Thus, the mounting pieces 42b can perform both the function of supporting the spring 86 and the function of preventing rotation of the yoke 42 relative to the differential carrier 22.
   Therefore, the configuration of the power transmission device 17 can be simplified as compared with the case where the member for supporting the spring 86 and the member for preventing rotation of the yoke relative to the differential carrier 22 are separately provided.
(5) In the embodiment, the spring 86 is formed into the substantially annular shape. Thus, the drive pinion shaft 18 can be inserted into the substantially central hole of the spring 86.

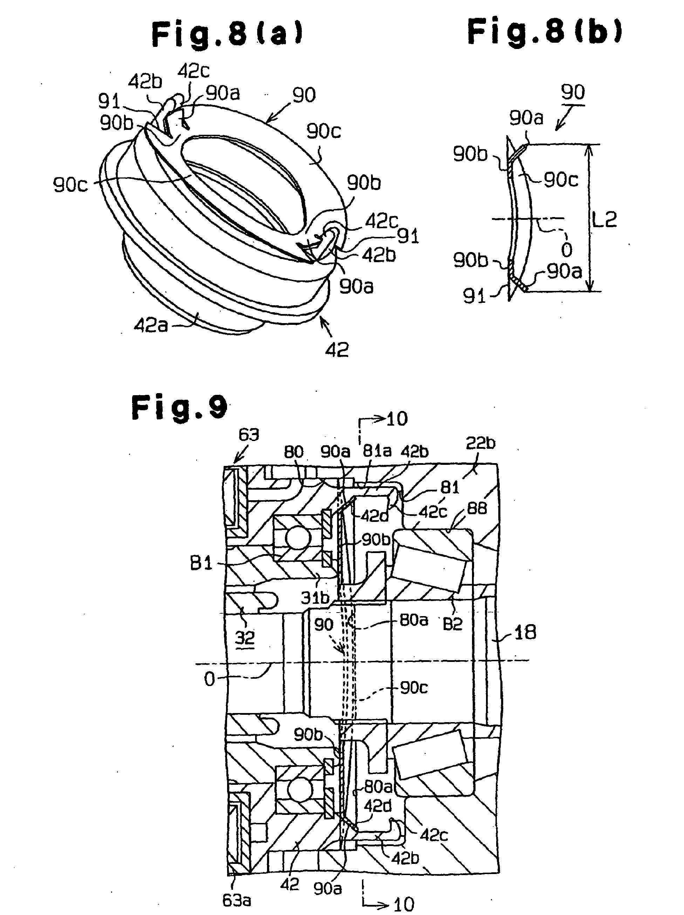

Now, a second embodiment of the invention will be described with reference to Figures 8 to 10. A power transmission device according to the below described embodiments including the second embodiment is a partial change of the first embodiment, and thus the same reference numerals denote the same parts as in the first embodiment, and the detailed descriptions thereof will be omitted and differences only will be described.

In this embodiment, the shape of the yoke 42 is different from that in the first embodiment, and the shape of a spring 90 is different from that of the spring 86 in the first embodiment.

As shown in Figure 9, at bases of the mounting pieces 42b, slopes 42d with an increasing space toward tips therebetween are formed on the facing surfaces. As shown in Figures 8(a) and 9, the spring 90 is formed into a substantially annular shape. A pair of notch recesses 91 are formed in an outer periphery of the spring 90. The notch recesses 91 are 180° apart around the axis O.

A protruding piece 90a slantingly extending rearward in Figure 9 is formed on a bottom of each notch recess 91, and as shown in Figure 8(b), the protruding piece 90a is placed inside an imaginary circle along an outline of the spring 90. The protruding pieces 90a abut against the slopes 42d by their elasticity. As shown in Figure 8(b), the distance between tips of the protruding pieces 90a is set the same as the distance L2 between the tips of the protruding pieces 86a according to the first embodiment shown in Figure 6(a).

As shown in Figures 8(b) and 9, in the spring 90, a flat portion 90b placed on an imaginary plane perpendicular to the axis O is formed inward of each protruding piece 90a.

As shown in Figures 8(a), 9 and 10, in the spring 90, a substantially semicircular blade 90c is formed on either side of the flat portion 90b, and the blade 90c is curved rearward in Figure 9. As shown in Figure 9, a central outer periphery of the blade 90c abuts against the stepped portion 80a of the cylindrical recess 80. Thus, the yoke 42 and the rear carrier 22b are urged to move apart from each other to restrain rattling of the yoke 42 along the axis O and in the radial direction relative to the differential carrier 22.

Therefore, the embodiment provides advantages similar to the advantages (1) to (5) of the first embodiment.

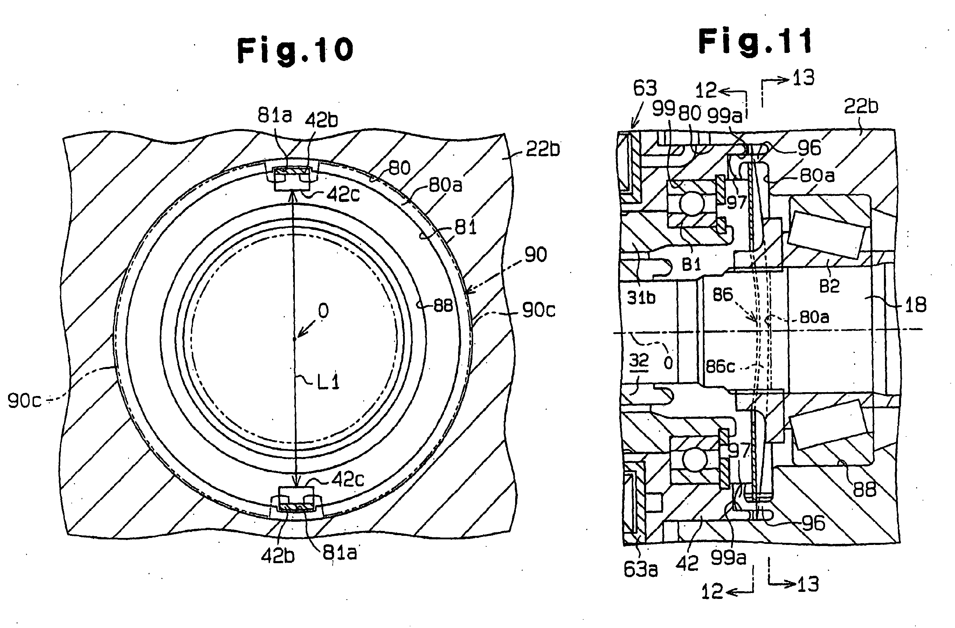

Now, a third embodiment of the invention will be described with reference to Figures 11 to 13.

In this embodiment, a forming position of the mounting piece to which the spring is mounted is different from that in the first embodiment.

As shown in Figure 11, the insert hole 81 and the detent groove 81a in the first embodiment are omitted from the rear carrier 22b in the third embodiment. Instead, a pair of mounting pieces 96 and a pair of locking claws 97 are provided in the stepped portion 80a of the cylindrical recess 80. The pair of mounting pieces 96 are 180° apart around the axis O.

The yoke 42 in the third embodiment has no mounting piece 42b and no locking claw 42c. Instead, a pair of detent grooves 99a are provided near mounting holes 99 in the rear end surface of the yoke 42. The pair of detent grooves 99a are 180° apart around the axis O.

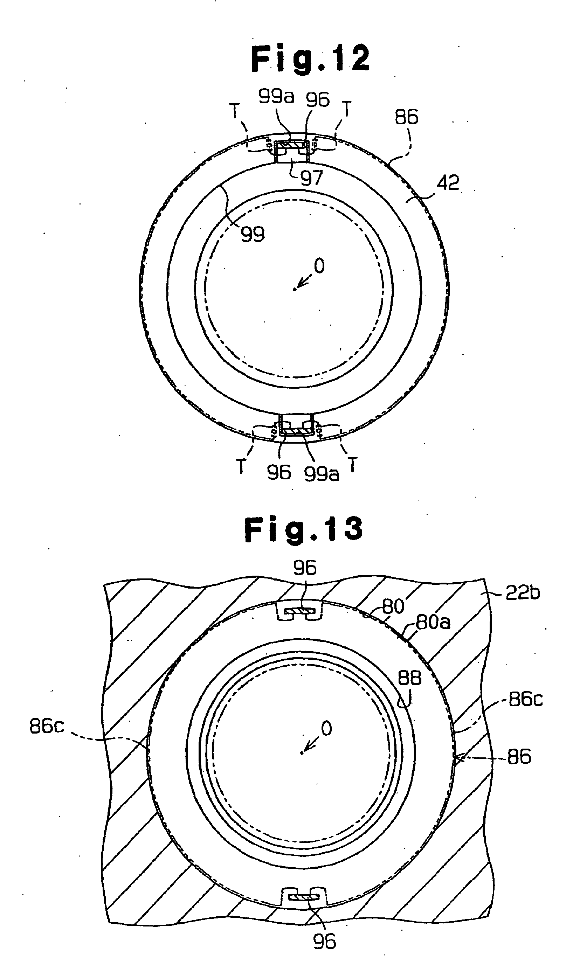

As shown in Figure 12, the spring 86 is placed so that the abutment portions T abut against the rear end surface of the yoke 42. As shown in Figures 11 and 13, the central outer periphery of the blade 86c is placed so as to abut against the stepped portion 80a. Thus, the yoke 42 and the rear carrier 22b are urged to move apart from each other to restrain rattling of the yoke 42 along the axis O and in the radial direction relative to the differential carrier 22.

Therefore, the embodiment provides advantages similar to the advantages (3) and (5) of the first embodiment, and also provides the following advantages:
(1) In this embodiment, the pair of mounting pieces 96 are provided in the rear carrier 22b, and the spring 86 is provided on the mounting pieces 96. This allows the members and the mechanisms that constitute the power transmission device 17 to be efficiently assembled with the axis O being substantially horizontally held, while preventing the spring 86 from falling off from the rear carrier 22b.
(2) In this embodiment, the pair of mounting pieces 96 are formed in the stepped portion 80a of the rear carrier 22b. Then, the pair of protruding pieces 86a of the spring 86 are abutted against the pair of mounting pieces 96. Further, the pair of locking claws 97 protruding inward are formed on the tips of the mounting pieces 96 to restrict movement of the protruding pieces 86a along the axis O by the locking claws 97. This prevents the spring 86 from accidentally falling off from the mounting pieces 96 when the power transmission device 17 is assembled.
(3) In this embodiment, the pair of detent grooves 99a extending along the axis O are formed on the rear end of the yoke 42. Then, the mounting pieces 96 of the rear carrier 22b are engaged in the detent grooves 99a to connect the yoke 42 to the differential carrier 22. Thus, the mounting pieces 96 can perform both the function of supporting the spring 86 and the function of stopping rotation of the yoke 42 relative to the differential carrier 22. Therefore, the configuration of the power transmission device 17 can be simplified as compared with the case where the member for supporting the spring 86 and the member for stopping rotation of the yoke 42 relative to the differential carrier 22 are separately provided.

Each of the embodiments may be embodied by being changed to other embodiments as described below.

In the first embodiment, two mounting pieces 42b and two locking claws 42c are formed. But, not limited to this, any number of mounting pieces 42b and locking claws 42c may be provided as long as the number is three or more. When three mounting pieces 42b and three locking claws 42c are formed, for example, the mounting pieces 42b are provided at 120° intervals around the axis O. Then, the locking claw 42c is provided on the tip of each mounting piece 42b, and a diameter of an imaginary circle passing through an inner end of each locking claw 42c is set to have the same length as the distance L1. The protruding pieces 86a and the notch recesses 87 are provided at the spring 86 at 120° intervals around the axis O. A diameter of an imaginary circle passing through the tip of each protruding piece 86a is set to have the same length as the distance L2. Such a configuration also provides advantages similar to the advantages of the first embodiment.

The change of the number of the mounting pieces 42b and the locking claws 42c may be applied to the second and third embodiments.

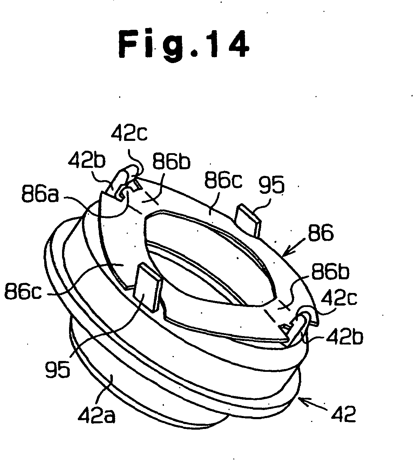

The mounting piece 42b according to the first embodiment has the function of supporting the spring 86 and the function of stopping rotation of the yoke 42 relative to the differential carrier 22. But, not limited to this, the mounting piece 42b may have the function of supporting the spring 86 only. Specifically, as shown in Figure 14, a detent protrusion 95 for stopping rotation of the yoke 42 relative to the differential carrier 22 is provided on the rear end surface of the yoke 42. A notch for avoiding interference with the detent protrusion 95 is provided in the spring 86. Then, a detent groove (not shown) extending along the axis O and into which the detent protrusion 95 can be inserted is formed in a portion where the insert hole 81 is formed in the rear carrier 22b. In this case, engagement between the detent protrusion 95 and the unillustrated detent groove stops rotation of the yoke 42 relative to the rear carrier 22b. Such a configuration also provides advantages similar to the advantages (1) to (3) and (5) of the first embodiment.

Conversely, the detent protrusion 95 may be provided on the rear carrier 22b, and the detent groove into which the detent protrusion 95 can be inserted may be provided in the yoke 42. Also in this case, advantages similar to the advantages (1) to (3) and (5) of the first embodiment can be obtained. Such a change may be applied to the second and the third embodiments.

In the first embodiment, the locking claw 42c is provided on the tip of the mounting piece 42b, but may be omitted. In this case, the protruding pieces 86a of the spring 86 are configured to be pressed between the pair of mounting pieces 42b. Such a change may be applied to the second and third embodiments.

## Claims

1. A power transmission device comprising:
a first rotating member and a second rotating member rotatably supported in a casing;
a clutch mechanism located between the first rotating member and the second rotating member, and switched between a power transmission state and a power shutoff state between the first rotating member and the second rotating member;
a pilot mechanism for switching the clutch mechanism between the power transmission state and the power shutoff state; and
a yoke fitted to the casing to support the pilot mechanism, power being transmitted between the first rotating member and the second rotating member when the pilot mechanism switches the clutch mechanism to the power transmission state,
**characterized in that** the casing includes a front portion and a rear portion divided and connected along an axis of the first rotating member and the second rotating member, and the yoke is fitted to the front portion, and
a mounting portion is formed in one of the rear portion and the yoke, and an urging member for urging the yoke toward the front portion is fitted to the mounting portion.

2. The power transmission device according to claim 1, **characterized in that** the mounting portion includes a plurality of mounting pieces protruding from the yoke along the axis of the first rotating member and the second rotating member, the urging member is formed of a leaf spring, and a recess that engages each of the mounting pieces is formed in the spring.

3. The power transmission device according to claim 1, **characterized in that** the mounting portion includes a plurality of mounting pieces protruding from the rear portion of the casing along the axis of the first rotating member and the second rotating member, the urging member is formed of a leaf spring, and the spring has a recess that engages each of the mounting pieces.

4. The power transmission device according to claim 2 or 3, **characterized in that** the each mounting piece has a claw for preventing the spring from falling off after being fitted to each mounting piece.

5. The power transmission device according to claim 2, **characterized in that** the rear portion of the casing has a groove that engages each mounting piece to stop rotation of the yoke relative to the rear portion.

6. The power transmission device according to claim 3, **characterized in that** the yoke has a groove that engages each mounting piece to stop rotation of the yoke relative to the rear portion.

7. The power transmission device according to any one of claims 1 to 6, **characterized in that** the first rotating member has a hollow portion and is rotatably supported by the front portion of the casing, the second rotating member is rotatably supported by the rear portion of the casing and inserted into the hollow portion of the first rotating member to be relatively rotatably placed in the hollow portion, the spring is formed into a ring shape, and the second rotating member passes through the spring.

8. The power transmission device according to claim 7, **characterized in that** the pilot mechanism includes an electromagnet supported by the yoke.

9. The power transmission device according to claim 7, **characterized in that** the first rotating member is connected to a propeller shaft of a vehicle, and the second rotating member is connected to a drive pinion shaft of the vehicle.

10. A method for assembling a casing by providing a front portion and a rear portion divided along an axis of a first rotating member and a second rotating member in a casing that accommodates the first rotating member and the second rotating member, and connecting the front portion and the rear portion, comprising the steps of:
fitting an urging member for urging a yoke toward the front portion to a mounting portion provided in one of the yoke fitted to the front portion and the rear portion to hold the urging member by the mounting portion, and
connecting the front portion and the rear portion with the front portion and the rear portion being placed along a substantially horizontal axis.
